(19) **Europäisches Patentamt**
**European Patent Office**
**Office européen des brevets**

(11) **EP 1 110 288 B1**

(12) **EUROPÄISCHE PATENTSCHRIFT**

(45) Veröffentlichungstag und Bekanntmachung des Hinweises auf die Patenterteilung:
**15.04.2009 Patentblatt 2009/16**

(51) Int Cl.:
***H02H 7/085*** (2006.01)

(21) Anmeldenummer: **99944600.8**

(22) Anmeldetag: **03.09.1999**

(86) Internationale Anmeldenummer:
**PCT/EP1999/006508**

(87) Internationale Veröffentlichungsnummer:
**WO 2000/014843 (16.03.2000 Gazette 2000/11)**

(54) **ANTRIEBSVORRICHTUNG UND VERFAHREN ZUM VERSTELLEN EINES FAHRZEUGTEILS**

DRIVE DEVICE AND METHOD FOR MOVING A VEHICLE PART

DISPOSITIF D'ENTRAINEMENT ET PROCEDE POUR LE DEPLACEMENT D'UNE PARTIE DE VEHICULE

(84) Benannte Vertragsstaaten:
**AT BE CH CY DE DK ES FI FR GB GR IE IT LI LU MC NL PT SE**

(30) Priorität: **03.09.1998 DE 19840164**

(43) Veröffentlichungstag der Anmeldung:
**27.06.2001 Patentblatt 2001/26**

(73) Patentinhaber: **Webasto AG**
**82131 Stockdorf (DE)**

(72) Erfinder: **KLESING, Joachim**
**D-80992 München (DE)**

(74) Vertreter: **Wiese, Gerhard**
**Wiese Konnerth Fischer**
**Patentanwälte Partnerschaft**
**Schertlinstrasse 18**
**81379 München (DE)**

(56) Entgegenhaltungen:
**EP-A- 0 582 966**

**Beschreibung**

Die Erfindung betrifft ein Verfahren zum Verstellen eines Fahrzeugteils zwischen mindestens zwei Stellungen gemäß dem Oberbegriff von Anspruch 1 sowie eine Antriebsvorrichtung für ein zwischen mindestens zwei Stellungen verstellbares Fahrzeugteil gemäß dem Oberbegriff von Anspruch 16.

Aus der DE-OS 29 26 938 ist ein gattungsgemäßes Verfahren sowie eine gattungsgemäße Antriebsvorrichtung bekannt. Dabei wird bei einem Schiebedachantrieb in gleichbleibenden zeitlichen Abständen die Motordrehzahl zu erfaßt, die Differenzen aufeinander folgender Werte werden gebildet, diese Differenzen werden aufaddiert, wenn sie größer als ein vorbestimmter Schwellwert sind, und ein Abschalten oder Reversieren des Motors wird ausgelöst, sobald die aufaddierte Summe einen vorbestimmten Schwellwert übersteigt.

Aus der DE 43 21 264 A1 ist eine Antriebsvorrichtung bekannt, bei welcher ein Elektromotor eine Kfz-Fensterscheibe antreibt. Mittels zweier um 90 Grad versetzter Hall-Sensoren, die mit einem auf der Motorwelle angeordneten Magneten zusammenwirken, wird ein Signal erzeugt, aus welchem die momentane Periodendauer der Motordrehung und damit die momentane Drehzahl des Motors zu jedem Zeitpunkt, zu dem ein solches Signal an einer Steuereinheit zum Steuern des Motors eingeht, bestimmt wird. Sobald die momentane Drehzahländerung, die sich aus der Differenz zweier aufeinanderfolgender Drehzahl-Meßwerte ergibt, einen vorgegebenen Schwellwert übersteigt, wird der Motor reversiert, um einen eventuell eingeklemmten Gegenstand freizugeben.

Aus der DE 195 11 581 A1 ist eine ähnliche Antriebsvorrichtung bekannt, bei welcher jedoch der Schwellwert positionsabhängig variabel gewählt ist, wobei in einem Speicher für bestimmte Positionen des Verstellwegs die in einem früheren Lauf erfaßte Geschwindigkeitsänderung zwischen zwei benachbarten Positionen gespeichert ist, um daraus in Abhängigkeit von der letzten aktuell erfaßten Position und Geschwindkeit den Abschaltschwellwert für die Geschwindigkeit jeweils positionsabhängig zu berechnen.

Aus der DE 43 12 865 A1 ist eine Antriebsvorrichtung für ein Kfz-Fenster bekannt, welche die Motordrehzahl mittels zweier Hall-Detektoren erfaßt und bei Überschreiten eines Schwellwerts für die relative Änderung der Drehzahl den Motor reversiert. Dabei wird der Schwellwert in Abhängigkeit von der erfaßten Motorspannung und der durch einen Temperatursensor am Motor ermittelten Umgebungstemperatur ständig neu berechnet. Dabei werden auch die Stand/ Betriebszeiten des Motors berücksichtigt, um von der Motortemperatur auf die Umgebungstemperatur schließen zu können.

Aus der DE 196 18 219 A1 ist bekannt, bei einem Schiebedachantrieb die Drehzahlschwelle bzw. die Drehzahländerungsschwelle des Motors, ab welcher ein Reversieren des Motors erfolgt, aus den positionsabhängigen Drehzahldaten eines vorher erfolgten Referenzlaufs abhängig von der Position des Deckels zu ermitteln.

Nachteilig bei diesen bekannten die Drehzahl erfassenden Antriebsvorrichtungen ist, daß keine ausreichende Kompensation von Vibrationseinflüssen, z.B. bei Fahrt über eine stark unebene Wegstrecke, vorgesehen ist. Vibrationen können zu starken Drehzahlschwankungen, insbesondere auch zu einer periodischen raschen Drehzahlabnahme des Motors führen, so daß dann fälschlicherweise ein Einklemmfall erkannt wird und der Motor abgeschaltet bzw. reversiert wird. Eine ausreichende Zuverlässigkeit des Einklemmschutzes ist somit nicht immer gegeben.

Aus der DE 42 11 495 C2 ist ein Einklemmschutz für einen Rollladen-, Markisen- Jalousien-oder Schwenktormotor bekannt, wobei für das Abschalten des Motors eine Drehmomentüberwachung erfolgt, bei welcher Meßwerte des Motordrehmoments herangezogen werden. Eine Abschaltung des Motors erfolgt, sobald eine vorbestimmte Anzahl von Überschreitungen eines Grenzwerts für das Motordrehmoment erfaßt wurde.

Es ist Aufgabe der vorliegenden Erfindung, eine Antriebsvorrichtung für ein zwischen mindestens zwei Stellungen bewegliches Fahrzeugteil sowie ein Verfahren zum Verstellen eines beweglichen Fahrzeugteils zwischen mindestens zwei Stellungen zu schaffen, wobei auf einfache Weise die Zuverlässigkeit des Erfassens des Einklemmens eines Gegenstands oder Körperteils erhöht wird.

Diese Aufgabe wird erfindungsgemäß gelöst durch durch ein Verfahren gemäß Anspruch 1 sowie durch eine Antriebsvorrichtung gemäß Anspruch 16.

Bei dieser erfindungsgemäßen Lösung ist vorteilhaft, daß durch das Abschneiden zu großer Drehzahländerungen die Fehlauslösung des Einklemmschutzes im Falle von Vibrationen auf einfache Weise verringert wird.

Der obere Schwellwert ist vorzugsweise variabel gewählt. Dadurch kann die Auslösegenauigkeit weiter erhöht werden.

Der obere Schwellwert ist dabei vorzugsweise in Abhängigkeit von dem letzten ermittelten Drehzahländerungswert oder einigen der letzten ermittelten Drehzahländerungswerte gewählt.

Dies stellt eine besonders zweckmäßige Ausgestaltung dar.

In weiterer vorteilhafter Ausgestaltung ist vorgesehen, das daß Gewicht eines Kraftänderungswerts Null ist, sofern der Wert unterhalb eines unteren Schwellwerts liegt, während das Gewicht für alle aufeinanderfolgenden Werte, die diesen Schwellwert übersteigen, Eins ist. Durch diese Einführung einer Untergrenze für die Berücksichtigung von Drehzahl- bzw. Kraftänderungen wird die Möglichkeit einer Fehlauslösung durch sehr langsame Krafteinwirkungsänderungen verringert.

Weitere bevorzugte Ausgestaltungen der Erfindung ergeben sich aus den Unteransprüchen.

Im folgenden ist eine Ausführungsform der Erfindung anhand der beiliegenden Zeichnungen näher erläutert. Es zeigen:

FIG. 1   eine schematische Darstellung einer erfindungsgemäßen Antriebsvorrichtung,

FIG. 2   eine graphische Darstellung eines beispielhaften zeitlichen Verlaufs der Periodendauer der Motordrehung, FIG.3 eine schematische Darstellung einer Ausgestaltung des erfindungsgemäßen Verfahrens zur Bestimmung eines Einklemmfalls, und

FIG.4 schematisch ein Fahrzeugdach zur Veranschaulichung des Verfahrens gemäß Fig. 3.

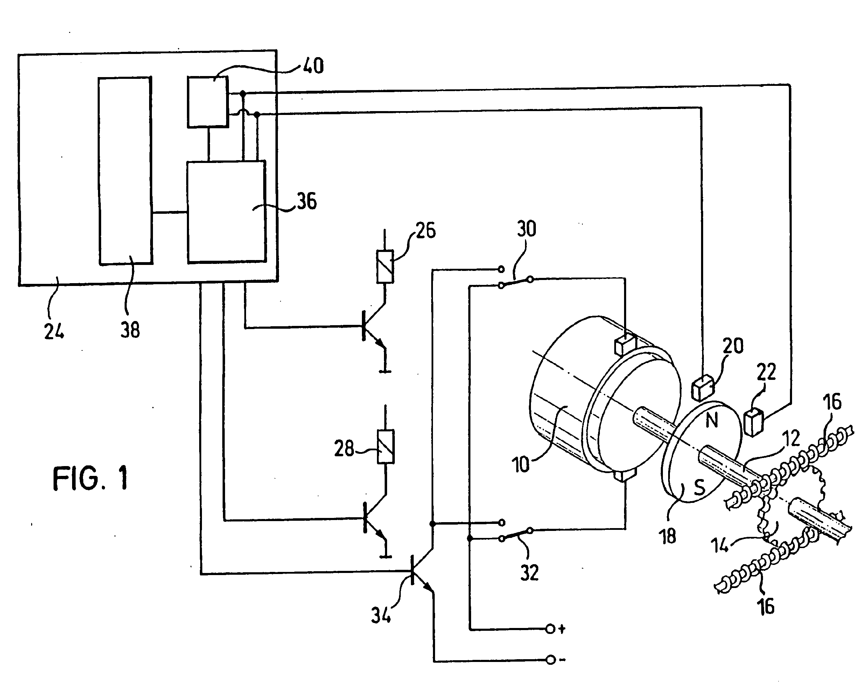

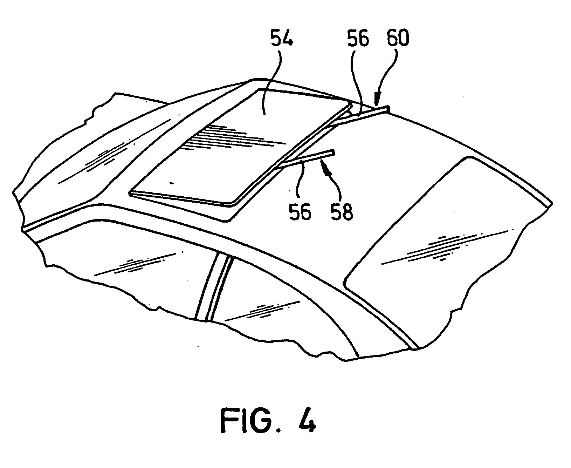

Unter Bezugnahme auf FIG. 1 treibt ein als Gleichstrommotor ausgebildeter Elektromotor 10 über eine Welle 12 ein Zahnritzel 14 an, welches mit zwei zug- und drucksteif geführten Antriebskabeln 16 im Eingriff steht. Zwischen dem Elektromotor 10 und dem Ritzel 14 liegt optional noch ein nicht dargestelltes Schneckengetriebe. Die beweglichen Deckel 54 von Fahrzeug-Schiebedächern, heute überwiegend als Schiebe-Hebe-Dächer oder Spoilerdächer ausgeführt, werden meistens mittels solcher Antriebskabel 16 angetrieben. Die Fensterheber einer Kfz-Tür wirken oft über eine Seiltrommel und ein glattes Seil auf das bewegbare Teil, d.h. die Scheibe. Für die folgende Betrachtung ist es gleichgültig, wie die Krafteinleitung auf das bewegliche Fahrzeugteil erfolgt. Bevorzugt wird der Deckel 54 eines Schiebe-Hebe-Daches angetrieben, der jedoch wegen der besseren Übersichtlichkeit nur in Fig. 4 dargestellt ist.

Auf der Welle 12 ist ein Magnetrad 18 mit wenigstens einem Süd- und einem Nordpol drehfest angebracht. Selbstverständlich können auch mehrere, beispielsweise je vier Nord-und Südpole am Magnetrad 18 angeordnet sein, wodurch die Periodendauer der Signale entsprechend verkürzt wird. In Umfangsrichtung um etwa 90 Grad versetzt sind nahe des Magnetrads 18 zwei Hall-Sensoren 20, 22 angeordnet, die jeweils bei jedem Durchgang des Nord- bzw. Südpols des Magnetrads 18 ein Impulssignal an eine mit einem Mikroprozessor 36 und einem Speicher 38 versehene Steuereinheit 24 abgeben, die somit etwa bei jeder Viertelumdrehung der Welle 12 ein Signal empfängt. Die Periodendauer ergibt sich jeweils aus dem Abstand zweier aufeinanderfolgender Signale an demselben Sensor 20 bzw. 22, die im Abstand einer vollen Umdrehung der Welle 12 eingehen. Wegen der 90 Grad-Anordnung der beiden Sensoren 20, 22 wird die Periodendauer abwechselnd aus der zeitlichen Differenz der beiden letzten Signale an dem Sensors 20 bzw. 22 berechnet, so daß jede Viertelumdrehung ein neuer Wert der Periodendauer zur Verfügung steht. Durch diese Art der Bestimmung der Periodendauer wirken sich Abweichungen von der exakten 90 Grad-Geometrie der Sensoranordnung nicht auf die Periodendauer aus, wie dies bei einer Bestimmung der Periodendauer aus der Zeitdifferenz zwischen dem letzten Signal des einen Sensors und des anderen Sensors der Fall wäre.

Aufgrund der Phasenverschiebung der Signale der beiden Sensoren 20, 22 kann auch die Drehrichtung bestimmt werden. Zusätzlich kann aus den Signalen der Hall-Sensoren 20, 22 auch die aktuelle Position des Deckels 54 ermittelt werden, indem diese Signale einem der Steuereinheit 24 zugeordneten Zähler 40 zugeführt werden.

Die Drehrichtung des Elektromotors 10 kann von der Steuereinheit 24 über zwei Relais 26, 28 mit Umschaltkontakten 30, 32 gesteuert werden. Die Drehzahl des Motors 10 wird durch Pulsbreitenmodulation über einen von der Steuereinheit 24 angesteuerten Transistor 34 gesteuert.

Aus dem Zeitpunkt des Signaleingangs von den Hall-Sensoren 20 bzw. 22 bestimmt der Mikroprozessor 36 die momentane Periodendauer der Umdrehung der Welle 12 und somit auch des Elektromotors 10. Somit steht etwa zu jeder Viertelumdrehung der Welle 12 ein Meßwert für die Periodendauer zur Verfügung. Um auch zwischen diesen Zeitpunkten einen Einklemmschutz zu gewährleisten, werden ständig in einem festen Zeitraster, z.B. nach jeweils 1 ms, Schätzwerte für die Periodendauer aus vorangegangenen Meßwerten der Periodendauer extrapoliert, beispielsweise nach folgender Formel:

$$T^*[k] = T[i] + k \cdot (a1 \cdot T[i-1] + a2 \cdot T[i-2] + a3 \cdot T[i-3]) \qquad (1)$$

wobei a1, a2, a3 Parameter sind, i ein Index ist, der bei jedem Signaleingang, d.h. bei jeder Viertelperiode, inkrementiert wird, und k der Laufindex des festen Zeitrasters ist, der bei jedem neuen Meßwert für die Periodendauer auf Null rückgesetzt wird. Statt der letzten vier Meßwerte können je nach Anforderung auch mehr oder weniger Meßwerte berücksichtigt werden, z.B. nur die letzten beiden.

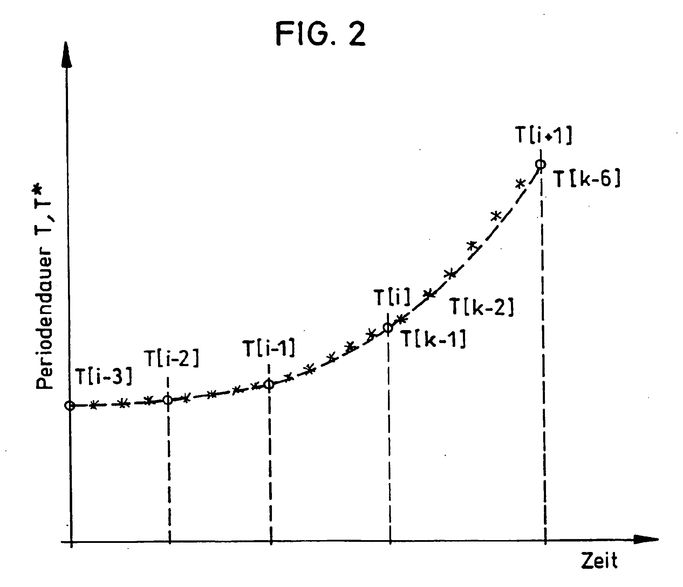

Die Parameter a1, a2, a3 modellieren das Gesamtsystem der Antriebsvorrichtung, d.h. Motor 10, Kraftübertragungskomponenten und Deckel, und sind durch die Federsteifigkeiten, Dämpfungen und Reibungen des Gesamtsystems bestimmt. Daraus ergibt sich eine Bandpaßwirkung mit der Eigenschaft, daß spektrale Anteile des Periodenzeitverlaufs, die von Vibrationen herrühren, schwächer bewertet werden als solche, die von einem Einklemmfall herrühren. FIG. 2 zeigt schematisch einen beispielhaften zeitlichen Verlauf der gemessenen Periodendauern T und der daraus abgeschätzten Periodendauern T*. Die gestrichelte Kurve stellt den wahren Verlauf der Periodendauer dar.

Aus den so bestimmten Schätzwerten für die Periodendauer wird dann die Drehzahländerung zum Zeitpunkt [k], bezogen auf den vorhergehenden Zeitpunkt [k-1], abgeschätzt, wobei ein Motorspannungsfilter und ein Wegprofilfilter verwendet werden, um Einflüsse der Motorspannung und der Position, an welcher sich das bewegliche Fahrzeugteil, d.h. der Deckel, gerade befindet, auf die Motordrehzahl zu eliminieren, wobei folgende Formel verwendet wird:

$$\Delta N^*[k] = (T^*[k] - T^*[k-1]) / (T^*[k])^2 - Vu(Um[k]) - Vr(x[k]) \qquad (2)$$

wobei Um[k] die Motorspannung zum Zeitpunkt [k] ist, Vu ein Motorspannungsfilter ist, welches die Abhängigkeit der Drehzahl von der von der Steuereinheit 24 erfaßten Motorspannung nachbildet, x[k] die Position des Deckels zum Zeitpunkt [k] ist und Vr ein Wegprofilfilter ist, das die Abhängigkeit der Motordrehzahl von der Position des Deckels nachbildet.

Das Motorspannungsfilter Vu bildet das dynamische Verhalten des Motors bei Spannungsänderungen nach. Vorzugsweise ist das Motorspannungsfilter Vu als Tiefpaß ausgebildet, dessen Zeitkonstante gleich der Motorzeitkonstante ist. Die Zeitkonstante ist abhängig von dem Betriebsfall, d.h. vom Öffnen oder Schließen des Deckels 54 in Schiebe- oder Absenkrichtung und von der Größe der Spannungsänderung.

Das Wegprofilfilter Vr wird durch einen Lernlauf nach Einbau der Antriebsvorrichtung in das Fahrzeug automatisch ermittelt. Die Position des Deckels 54 wird, wie oben erwähnt, aus den mittels des Zählers 40 aufsummierten Impulssignalen der Hall-Sensoren 20, 22 bestimmt.

Die Entscheidung, ob ein Einklemmfall vorliegt oder nicht, erfolgt anhand der folgenden Formel:

$$\Sigma (Vf \cdot \Delta N^*[k]) = \Sigma (\Delta F[k]) > Fmax \qquad (3)$$

Die abgeschätzten Drehzahländerungen ΔN*[k] werden mit einer festgesetzten zeitlich konstanten Untergrenze verglichen. Sobald sie diese Untergrenze übersteigen, werden sie jeweils mit einem Proportionalitätsfaktor Vf multipliziert, der die Steilheit der Motorkennlinie des Elektromotors 10 (Drehmoment über Drehzahl) wiedergibt. Die Steilheit ist bei konstanter Motorspannung und Motortemperatur in etwa konstant, ist jedoch für jeden Elektromotor 10 individuell verschieden. Um diese Einflüsse zu eliminieren, wird einerseits durch einen Temperaturfühler die Umgebungstemperatur erfaßt und die Motortemperatur über die Erfassung der Betriebsdauer genähert (statt der Umgebungstemperatur kann auch die Motortemperatur durch einen Temperatursensor am Elektromotor 10 direkt erfaßt werden). Andererseits werden bei jedem Elektromotor 10 vor dem Anschließen an den Deckel 54 im Rahmen der Fertigungsendprüfung bei konstanter Motorspannung zwei Wertepaare für Drehzahl und Drehmoment ermittelt und in dem Speicher 38 abgespeichert. Aus diesen Meßwerten wird die Steigung der Motorkennlinie ermittelt, woraus der Proportionalitätsfaktor Vf berechnet wird.

Das Produkt aus ΔN*[k] und Vf entspricht der Änderung ΔF[k] der Krafteinwirkung auf die Verschiebebewegung des Deckels 54 zum Zeitpunkt [k], bezogen auf den Zeitpunkt [k-1].

Die ΔF[k]-Werte werden aufsummiert, solange die ΔN*[k]-Werte über der festgesetzten Untergrenze liegen. Sobald zwei aufeinanderfolgende ΔN*[k]-Werte wieder darunter liegen, wird die Summe auf Null gesetzt. Falls ein ΔN*[k]-Wert eine festgesetzte Obergrenze übersteigt, geht an Stelle dieses ΔN*[k] nur der Wert der Obergrenze in die Summe ein. Dies dient dazu, Einflüsse von Vibrationen, die zu kurzzeitigen periodischen Spitzen der Drehzahländerung führen, auf das Erkennen eines Einklemmfalles möglichst zu eliminieren. Diese Obergrenze kann im einfachsten Fall konstant gewählt werden. Um die Genauigkeit der Auslösung zu erhöhen, kann jedoch die Obergrenze auch in Abhängigkeit von der aktuell ermittelten Drehzahländerung zeitlich variabel gewählt werden, z.B. in der Form, daß die Obergrenze mit ansteigender aktueller Drehzahländerung angehoben wird.

Sobald die Summe der ΔF[k] eine maximal zulässige Klemmkraft Fmax übersteigt, löst die Steuereinheit 24 durch Ansteuerung der Relais 26, 28 über die Schalter 30, 32 ein Reversieren des Elektromotors 10 aus, um einen eingeklemmten Gegenstand oder ein eingeklemmtes Körperteil sofort wieder frei zu geben.

Somit ist der Einklemmschutz durch das beschriebene Extrapolieren der Periodendauern auch zwischen zwei Meßwerten der Periodendauer jeweils zu festen Zeitpunkten aktiv, wodurch ein Einklemmfall früher, d.h. noch bei geringerer Einklemmkraft, erkannt werden kann, was Verletzungen oder Beschädigungen besser vorbeugt und dadurch die Sicherheit der Antriebsvorrichtung erhöht.

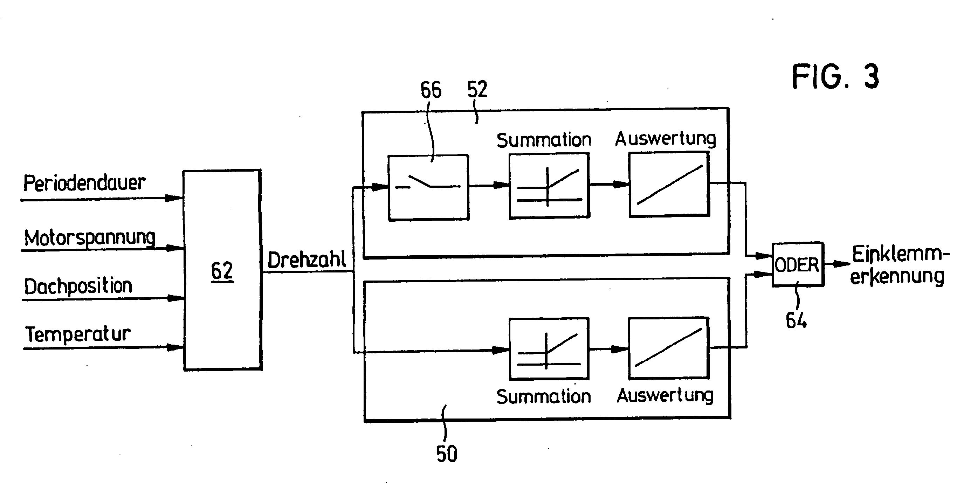

In Fig.3 ist schematisch eine weitere Ausgestaltung der Erfindung dargestellt. Der wesentliche Unterschied zur oben beschrieben Ausführungsform besteht darin, daß parallel und unabhängig zu einer erfindungsgemäßen Extrapolation der gemessenen Periodendauern zu bestimmten Zeitpunkten und der Bestimmung von Schätzwerten für die Krafteinwirkung auf das verstellbare Fahrzeugteil in einer ersten Berechnung 50 eine zweite Berechnung 52 mit einem eigenen Parametersatz und einer anderen Abtastrate durchgeführt wird, die ebenfalls einen Wert für die momentane Krafteinwirkung liefert. Für die Entscheidung, ob der Motor abgeschaltet bzw. reversiert werden soll, werden die Ergebnisse beider Berechnungen in einer Logikstufe 54 in Form einer ODER-Verknüpfung berücksichtigt. Dies ergibt sich aus folgenden Überlegungen:

Die Steifigkeit des Gesamtsystems setzt sich aus den Steifigkeiten der Schiebe-Hebe-Dachmechanik, des eingeklemmten Körpers sowie der Fahrzeugkarosserie zusammen. Einerseits hängt die Steifigkeit des eingeklemmten Körpers von der Art des Körpers ab. Andererseits ist die Steifigkeit der Karosserie stark von dem Ort abhängig, an dem der Körper eingeklemmt wird. Dies gilt insbesondere bei der Absenkbewegung eines Deckels 54 aus einer Ausstellposition, siehe Fig. 4. Wird dabei ein Körper 56 im Bereich der Dachmitte eingeklemmt (in Fig. 4 mit 58 angedeutet), so ist das Gesamtsystem aufgrund der möglichen Durchbiegung der Deckelhinterkante wesentlich weicher als bei einem Einklemmen im Randbereich (in Fig. 4 mit 60 angedeutet).

Mit Abtastrate ist im folgenden der Abstand der Zeitpunkte gemeint, zu welchen ein Wert für die momentane Krafteinwirkung bestimmt wird. Wenn das System mit einer einzigen festen Abtastrate arbeitet, können der Parametersatz der Berechnung, insbesondere die Schwell-bzw. Grenzwerte, und die gewählte Abtastrate nur für eine einzige Steifigkeit des Gesamtsystems optimiert werden, wobei jedoch in der Praxis je nach Art und Stelle des eingeklemmten Körpers unterschiedliche Steifigkeiten des Gesamtsystems maßgeblich sein können.

Durch das Durchführen einer zweiten parallelen Berechnung ist es möglich, durch entsprechende Wahl der Berechnungsparameter und der der Berechnung zugrunde liegenden Abtastrate, d.h. der Wahl der Zeitpunkte, zu welchen ein neuer Wert der monentanen Krafteinwirkung berechnet wird, diese zweite Berechnung für eine andere Steifigkeit zu optimieren.

Die zweite Berechnung 52 ist vorzugsweise für die Erfassung langsamer Krafteinwirkungsänderungen, d.h. kleiner Steifigkeiten, optimiert, während die erste Berechnung 50 für die Erfassung schneller Krafteinwirkungsänderungen, d.h. großer Steifigkeiten, optimiert ist.

In der Regel ist es bei der zweiten Berechnung 52 nicht erforderlich, eine Extrapolation von Meßwerten der Periodendauer durchzuführen, sondern es wird, je nach relevanten Steifigkeitsbereich, allenfalls nach Eingang eines neuen Meßwerts bzw. nur nach jedem n-ten Eingang eines Meßwerts eine Berechnung eines neuen Werts der momentanen Krafteinwirkung vorgenommen. Grundsätzlich kann jedoch, falls erforderlich, auch die zweite Berechnung 52 einen Extrapolationsalgorithmus verwenden, wobei die Extrapolationszeitpunkte im einem größeren Abstand als bei der ersten Berechnung 50 gewählt sind.

Gemäß Fig. 3 wird in einer Drehzahlerfassungsstufe 62 aus den Eingangsgrößen Periodendauer T, Motorspannung, Deckelposition x sowie Motortemperatur gemäß den obigen Formeln (1) und (2) mit der ersten (höheren) Abtastrate, d.h. zu den Meßzeitpunkten [i] und den Extrapolationszeitpunkten [k], die aktuelle Drehzahländerung $\Delta N^*$ bzw. die aktuelle Drehzahl $N^*$ (diese ergibt sich aus $N^*[k] = 1/T^*[k] - Vu(Um[k]) - Vr(x[k]$; statt [k] kann auch [i] stehen) bestimmt. Ferner wird die Motortemperatur bei der Drehzahlbestimmung bei der Umrechnung von Drehzahländerung in Kraftänderung gemäß Formel (3) berücksichtigt. Die erste Abtastrate ist so gewählt, daß sie für die Erfassung von Einklemmfällen mit den höchsten zu erwartenden Systemsteifigkeiten optimal ist. Die Drehzahlerfassungsstufe 62 wird von der ersten Berechnung 50 und der zweiten Berechnung 52 gemeinsam verwendet

In der ersten Berechnung 50 wird aus der Drehzahländerung $\Delta N^*$ mittels der Formel (3) in der oben beschriebenen Weise unter Verwendung eines ersten Werts für die festgesetzte Untergrenze, eines ersten Werts für die festgesetzte Obergrenze sowie eines ersten Werts für den Schwellwert Fmax zu den durch die erste Abtastrate festgelegten Zeitpunkten, d.h. den Extrapolationszeitpunkten [k], festgestellt, ob die momentane Krafteinwirkung diesen ersten Schwellwert Fmax überschreitet. Die Werte dieses ersten Parametersatzes sind für die Erfassung von Einklemmfällen mit der größten zu erwartenden Systemsteifigkeit optimiert.

In der zweiten Berechnung 52 wird die Abtastrate so gewählt, daß sie für die Erfassung von Einklemmfällen mit den niedrigsten zu erwartenden Systemsteifigkeiten optimal ist. Diese zweite Abtastrate kann z.B. so gewählt werden, daß nur jeder vierte Meßwert der Periodendauer T berücksichtigt werden soll. In diesem Fall wird die zweite Berechnung nur bei jedem vierten Signaleingang von den Hall-Sensoren 20, 22 durchgeführt, d.h. es wird nur jede vierte von der Stufe 62 ermittelte Drehzahl N[i], die auf eine gemessene Periodendauer T zurückgeht in der in Fig. 4 mit 66 angedeuteten Abtaststufe berücksichtigt. Die aus extrapolierten Periodendauern T* ermittelten Drehzahlen N*[k] werden natürlich ohnehin nicht berücksichtigt. Die zweite Berechnung 52 wird also nur zu jedem vierten Zeitpunkt [i] ausgeführt.

Zunächst wird dabei die Drehzahländerung $\Delta N[i]$ gegenüber dem letzten Meßwert bestimmt. Dann wird in analoger Weise mittels der Formel (3) unter Verwendung eines zweiten Werts für die festgesetzte Untergrenze, eines zweiten Werts für die festgesetzte Obergrenze sowie eines zweiten Werts für den Schwellwert Fmax festgestellt, ob die momentane Krafteinwirkung diesen zweiten Schwellwert Fmax überschreitet. Die Werte dieses zweiten Parametersatzes sind für die Erfassung von Einklemmfällen mit der kleinsten zu erwartenden Systemsteifigkeit optimiert.

Für die Entscheidung, ob ein Einklemmfall vorliegt, d.h. der Motor abgeschaltet bzw. reversiert werden soll, werden die Ergebnisse der ersten und der zweiten Berechnung in einer Logikstufe 64 miteinander logisch verküpft. Im einfachsten Fall ist das eine ODER-Verknüpfung. In diesem Fall wird also der Motor abgeschaltet bzw. reversiert, wenn eine der beiden Berechnungen einen Einklemmfall erfaßt hat. Die Entscheidung wird zu jedem Zeitpunkt, zu dem die erste Berechnung 50 ein neues Ergebnis liefert, vorgenommen. Da wesentlich seltener neue Ergebnisse der zweiten Berechnung 52 vorliegen, wird immer das letzte Ergebnis der zweiten Berechnung 52 der Logikstufe 64 zugeführt.

Durch die Verknüpfung der Ergebnisse der beiden Berechnungen 52, 54 können sowohl schnelle als auch langsame Krafteinwirkungsänderungen optimal erfaßt werden.

**Bezugszeichenliste**

| | |
|---|---|
| Elektromotor | **10** |
| Welle | **12** |
| Ritzel | **14** |
| Antriebskabel | **16** |
| Magnetrad | **18** |
| Hall-Sensoren | **20, 22** |
| Steuereinheit | **24** |
| Relais | **26, 28** |
| Umschalter | **30, 32** |
| Transistor | **34** |
| Mikroprozessor | **36** |
| Speicher | **38** |
| Zähler | **40** |
| erste Berechnung | **50** |
| zweite Berechnung | **52** |
| Deckel | **54** |
| Einklemmkörper | **56** |
| Position in Dachmitte | **58** |
| Position im Dachrandbereich | **60** |
| Drehzahlerfassungsstufe | **62** |
| Logikstufe | **64** |
| Abtastungsstufe | **66** |

**Patentansprüche**

1. Verfahren zum Verstellen eines beweglichen Fahrzeugteils (54) zwischen mindestens zwei Stellungen, wobei das Fahrzeugteil von einem Elektromotor (10) angetrieben wird, ein Pulssignal proportional zur Drehbewegung des Elektromotors (10) erzeugt wird und einer Steuereinheit (24) zum Steuern des Motors zugeführt wird und der Zeitpunkt ([i]) des Eingangs eines jeden Signals an der Steuereinheit erfaßt wird, und wobei zu bestimmten Zeitpunkten ([k]) aus mindestens einem Teil dieser bisher gemessenen Zeitpunkte jeweils ein Wert ($\Delta N^*[k]$) für die Änderung der Motordrehzahl bestimmt wird, aus jedem Drehzahländerungswert ein Kraftänderungswert ($\Delta F^*[k]$) berechnet wird und mindestens ein Teil der bisher ermittelten Kraftänderungswerte mit einer Gewichtung aufsummiert wird, um einen Wert für die momentane Krafteinwirkung auf das bewegliche Fahrzeugteil zu bestimmen, wobei dieser Wert als ein Kriterium bei der Entscheidung verwendet wird, ob der Motor abgeschaltet bzw. reversiert wird oder nicht, **dadurch gekennzeichnet, daß** bei der Berechnung der Kraftänderungswerte ($\Delta F^*[k]$) für jeden Drehzahländerungswert ($\Delta N^*[k]$), der einen oberen Schwellwert übersteigt, der Wert dieses oberen Schwellwerts an Stelle des Drehzahländerungswerts herangezogen wird.

2. Verfahren nach Anspruch 1, **dadurch gekennzeichnet, daß** der obere Schwellwert variabel ist.

3. Verfahren nach Anspruch 2, **dadurch gekennzeichnet, daß** der obere Schwellwert in Abhängigkeit von mindestens einem Teil der ermittelten Drehzahländerungswerte ($\Delta N^*[k]$) gewählt ist.

4. Verfahren nach Anspruch 3, **dadurch gekennzeichnet, daß** der obere Schwellwert in Abhängigkeit von dem letzten

ermittelten Drehzahländerungswert ($\Delta N^*[k]$) gewählt ist.

5. Verfahren nach Anspruch 1 bis 4, **dadurch gekennzeichnet, daß** das Gewicht eines Kraftänderungswerts ($\Delta F^*[k]$) Null ist, sofern der Wert unterhalb eines unteren Schwellwerts liegt, während das Gewicht für alle aufeinanderfolgenden Werte, die diesen Schwellwert übersteigen, Eins ist.

6. Verfahren nach Anspruch 1 bis 5, **dadurch gekennzeichnet, daß** jeder Drehzahländerungswert ($\Delta N^*[k]$) bzw. der stattdessen verwendete Wert des oberen Schwellwerts mit einem Proportionalitätsfaktor (Vf) multipliziert wird, um den entsprechenden Kraftänderungswert ($\Delta F^*[k]$) zu bestimmen

7. Verfahren nach Anspruch 6, **dadurch gekennzeichnet, daß** der Proportionalitätsfaktor (Vf) in Abhängigkeit von der Motorkennlinie gewählt ist.

8. Verfahren nach Anspruch 7, **dadurch gekennzeichnet, daß** die Motorkennlinie vor Inbetriebnahme ohne Koppelung zum angetriebenen Fahrzeugteil (54) für mindestens eine Motorspannung ermittelt wird.

9. Verfahren nach Anspruch 8, **dadurch gekennzeichnet, daß** die Motorkennlinie **dadurch** ermittelt wird, daß bei fester Motorspannung zwei Wertepaare von Drehzahl und Drehmoment gemessen werden.

10. Verfahren nach Anspruch 6 bis 9, **dadurch gekennzeichnet, daß** der Proportionalitätsfaktor (Vf) in Abhängigkeit von der Motortemperatur gewählt ist.

11. Verfahren nach Anspruch 10, **dadurch gekennzeichnet, daß** die Motortemperatur **dadurch** abgeschätzt wird, daß die Umgebungstemperatur und die Betriebsdauer des Elektromotors (10) erfaßt wird.

12. Verfahren nach Anspruch 1 bis 11, **dadurch gekennzeichnet, daß** der Elektromotor (10) von der Steuerungseinheit (24) abgeschaltet oder reversiert wird, sobald der Schätzwert der aktuellen Krafteinwirkung einen vorbestimmten Auslöseschwellwert (Fmax) übersteigt.

13. Verfahren nach Anspruch 1 bis 12, **dadurch gekennzeichnet, daß** zwischen zwei Pulssignal-Eingangszeitpunkten zu bestimmten Extrapolationszeitpunkten ([k]) der Wert für die momentane Krafteinwirkung auf das Fahrzeugteil (54) bestimmt wird.

14. Verfahren nach Anspruch 13, **dadurch gekennzeichnet, daß** jeweils bei Eingang eines neuen Pulssignals aus der Differenz zu mindestens einem früheren Pulssignalmeßwert ein Meßwert der aktuellen Periodendauer ($T[i]$) der Motordrehung bestimmt wird, wobei zu jedem Extrapolationszeitpunkt ([k]) ein Schätzwert der aktuellen Periodendauer ($T^*[k]$) unter Berücksichtigung mindestens einer vorangegangenen gemessenen Periodendauer ($T[i-1]$, $T[i-2]$, $T[i-3]$) ermittelt wird und aus den abgeschätzten Periodendauern der Wert für die Drehzahländerung ($\Delta N^*[k]$) bestimmt wird.

15. Verfahren nach Anspruch 14, **dadurch gekennzeichnet, daß** sich der Wert der Drehzahländerung ($\Delta N^*[k]$) aus der Differenz der für einen Extrapolationszeitpunkt abgeschätzten Periodendauer ($T^*[k]$) und der für den vorhergehenden Extrapolationszeitpunkt abgeschätzten Periodendauer ($T^*[k-1]$) ergibt, wobei sich die für jeden Extrapolationszeitpunkt abgeschätzte Periodendauer ergibt als Summe aus der letzten gemessenen Periodendauer ($T[i]$) und der mit Parametern (a1, a2, a3) gewichteten Summe aus mehreren vor der letzten gemessenen Periodendauer ($T[i]$) gemessenen Periodendauer ($T[i-1]$, $T[i-2]$, $T[i-3]$), wobei letztere Summe mit der seit der letzten Messung vergangenen Zeit ([k]) multipliziert ist.

16. Antriebsvorrichtung für ein zwischen mindestens zwei Stellungen bewegliches Fahrzeugteil (54), mit einem Elektromotor (10) zum Antreiben des Fahrzeugteils (54) und einer Einrichtung (18, 20, 22) zum Erzeugen eines Pulssignals entsprechend der Drehbewegung des Elektromotors (10), das einer Steuereinheit (24) zum Steuern des Motors zugeführt wird, wobei die Steuereinheit (24) so ausgebildet ist, daß der Zeitpunkt des Eingangs eines jeden Signals an der Steuereinheit (24) erfaßt wird, zu bestimmten Zeitpunkten aus mindestens einem Teil dieser bisher gemessenen Zeitpunkte jeweils ein Wert für die Änderung der Motordrehzahl bestimmt wird, aus jedem Drehzahländerungswert ein Kraftänderungswert berechnet wird und mindestens ein Teil der bisher ermittelten Kraftänderungswerte mit einer Gewichtung aufsummiert wird, um einen Wert für die momentane Krafteinwirkung auf das bewegliche Fahrzeugteil zu bestimmen, wobei dieser Wert als ein Kriterium bei der Entscheidung verwendet wird, ob der Motor abgeschaltet bzw. reversiert wird oder nicht, **dadurch gekennzeichnet, daß** die Steuereinheit (24)

7

so ausgebildet ist, daß bei der Berechnung der Kraftänderungswerte für jeden Drehzahländerungswert, der einen oberen Schwellwert übersteigt, der Wert dieses oberen Schwellwerts an Stelle des Drehzahländerungswerts herangezogen wird.

**17.** Antriebsvorrichtung nach Anspruch 16, **dadurch gekennzeichnet, daß** die Steuereinheit (24) zum Ausführen des Verfahrens nach einem der Ansprüche 2 bis 15 ausgebildet ist.

**Claims**

**1.** Method for moving a movable vehicle part (54) between at least two positions, the vehicle part being driven by an electric motor (10), a pulse signal proportional to the rotational movement of the electric motor (10) being generated and supplied to a control unit (24) for controlling the motor, and the time ([i]) of the input of each signal to the control unit being registered and, at specific times ([k]), from at least some of these previously measured times, in each case a value ($\Delta$N*[k]) for the change in the motor rotational speed being determined, from each rotational speed change value a force change value ($\Delta$F*[k]) being calculated, and at least some of the force change values previously determined being summed with a weighting in order to determine the value for the instantaneous force on the movable vehicle part, this value being used as a criterion in the decision as to whether the motor is switched off or reversed or not, **characterized in that,** during the calculation of the force change values ($\Delta$F*[k]), for each rotational speed change value ($\Delta$N*[k]) which exceeds an upper threshold value, the value of this upper threshold value is used instead of the rotational speed change value.

**2.** Method according to Claim 1, **characterized in that** the upper threshold value is variable.

**3.** Method according to Claim 2, **characterized in that** the upper threshold value is chosen as a function of the least some of the rotational speed change values ($\Delta$N*[k]) determined.

**4.** Method according to Claim 3, **characterized in that** the upper threshold value is chosen as a function of the last rotational speed change value ($\Delta$N*[k]) determined.

**5.** Method according to Claim 1 to 4, **characterized in that** the weight of a force change value ($\Delta$F*[k]) is zero provided that the value lies below a lower threshold, while the weight for all successive values which exceed this threshold value is one.

**6.** Method according to Claim 1 to 5, **characterized in that** each rotational speed change value ($\Delta$N*[k]) or the value of the upper threshold value that is used instead is multiplied by a proportionality factor (Vf) in order to determine the corresponding force change value ($\Delta$F*[k]).

**7.** Method according to Claim 6, **characterized in that** the proportionality factor (Vf) is chosen as a function of the motor characteristic curve.

**8.** Method according to Claim 7, **characterized in that** the motor characteristic curve is determined for at least one motor voltage before commissioning, without coupling to the driven vehicle part (54).

**9.** Method according to Claim 8, **characterized in that** the motor characteristic curve is determined by two pairs of values of rotational speed and torque being measured at a fixed motor voltage.

**10.** Method according to Claim 6 to 9, **characterized in that** the proportionality factor (Vf) is chosen as a function of the motor temperature.

**11.** Method according to Claim 10, **characterized in that** the motor temperature is estimated by the ambient temperature and the operating time of the electric motor (10) being registered.

**12.** Method according to Claim 1 to 11, **characterized in that** the electric motor (10) is switched off or reversed by the control unit (24) as soon as the estimated value of the current force exceeds a predetermined triggering threshold value (Fmax).

**13.** Method according to Claim 1 to 12, **characterized in that,** between two pulse signal input times, at specific extrapolation times ([k]), the value of the instantaneous force on the vehicle part (54) is determined.

14. Method according to Claim 13, **characterized in that**, in each case upon the input of a new pulse signal, the measured value of the current period (T[i]) of the motor rotation is determined from the difference from at least one earlier pulse signal measured value, at each extrapolation time ([k]) an estimated value of the current period (T*[k]) being determined while taking into account at least one preceding measured period (T[i-1], T[i-2], T[i-3]), and the value for the rotational speed change (ΔN*[k]) being determined from the estimated periods.

15. Method according to Claim 14, **characterized in that** the value of the rotational speed change (ΔN*[k]) results from the difference between the period (T*[k]) estimated for an extrapolation time and the period (T*[k-1]) estimated for the preceding extrapolation time, the period estimated for each extrapolation time resulting from the sum of the last measured period (T[i]) and the sum, weighted with parameters (a1, a2, a3), of a plurality of periods (T[i-1], T[i-2], T[i-3]) measured before the last measured period (T[i]), the latter sum being multiplied by the time ([k]) that has elapsed since the last measurement.

16. Drive device for a vehicle part (54) that can move between at least two positions, having an electric motor (10) for driving the vehicle part (54) and a device (18, 20, 22) for generating a pulse signal corresponding to the rotational movement of the electric motor (10), which is supplied to a control unit (24) for controlling the motor, the control unit (24) being formed in such a way that the time of the input of each signal to the control unit (24) is registered, at specific times, from at least some of these previously measured times, in each case a value for the change in the motor rotational speed being determined, a force change value being calculated from each rotational speed change value, and at least some of the previously determined force change values being summed with a weighting in order to determine the value for the instantaneous force on the movable vehicle part, this value being used as a criterion in the decision as to whether the motor is switched off or reversed or not, **characterized in that** the control unit (24) is designed in such a way that, when calculating the force change values for each rotational speed change value which exceeds an upper threshold value, the value of this upper threshold value is used instead of the rotational speed change value.

17. Drive device according to Claim 16, **characterized in that** the control unit (24) is designed to implement the method according to one of Claims 2 to 15.

## Revendications

1. Procédé pour le déplacement d'un élément mobile (54) d'un véhicule entre au moins deux positions, sachant que l'élément de véhicule est entraîné par un moteur électrique (10), qu'un signal à impulsions proportionnel au mouvement de rotation du moteur électrique (10) est produit et est apporté à une unité de commande (24) destinée à commander le moteur et que l'instant ([i]) d'arrivée de chaque signal à l'unité de commande est enregistré, et sachant qu'à des instants déterminés ([k]), on détermine, à partir d'au moins une partie de ces instants jusqu'alors mesurés, une valeur respective (ΔN*[k]) pour la modification de la vitesse de rotation du moteur, qu'on calcule à partir de chaque valeur de modification de vitesse de rotation une valeur de modification de force (ΔF*[k]) et qu'au moins une partie des valeurs de modification de force jusqu'alors déterminées sont totalisées avec une pondération afin de déterminer une valeur pour la force agissant momentanément sur l'élément mobile de véhicule, sachant que cette valeur est utilisée comme critère pour décider si le moteur est ou non désactivé ou inversé, **caractérisé en ce que,** pour le calcul des valeurs de modification de force (Δf*[k]), on utilise, pour chaque valeur de modification de vitesse de rotation (ΔN*[k]) qui dépasse une valeur de seuil supérieure, la valeur de cette valeur de seuil supérieure au lieu de la valeur de modification de vitesse de rotation.

2. Procédé selon la revendication 1, **caractérisé en ce que** la valeur de seuil supérieure est variable.

3. Procédé selon la revendication 2, **caractérisé en ce que** la valeur de seuil supérieure est choisie en fonction d'au moins une partie des valeurs de modification de vitesse de rotation déterminées (ΔN*[k]).

4. Procédé selon la revendication 3, **caractérisé en ce que** la valeur de seuil supérieure est choisie en fonction de la dernière valeur de modification de vitesse de rotation déterminée (ΔN*[k]).

5. Procédé selon l'une des revendications 1 à 4, **caractérisé en ce que** le poids d'une valeur de modification de force (ΔF*[k]) est égal à zéro dans la mesure où la valeur se situe en dessous d'une valeur de seuil inférieure, tandis que le poids de toutes les valeurs successives qui dépassent cette valeur de seuil est égal à un.

6. Procédé selon l'une des revendications 1 à 5, **caractérisé en ce que** chaque valeur de modification de vitesse de rotation (ΔN*[k]), ou la valeur de la valeur de seuil supérieure qui est utilisée à sa place, est multipliée par un facteur de proportionnalité (Vf) pour déterminer la valeur de modification de force correspondante (ΔF*[k]).

7. Procédé selon la revendication 6, **caractérisé en ce que** le facteur de proportionnalité (Vf) est choisi en fonction de la courbe caractéristique du moteur.

8. Procédé selon la revendication 7, **caractérisé en ce que** la courbe caractéristique du moteur est déterminée avant la mise en service, sans couplage à l'élément de véhicule entraîné (54), pour au moins une tension électrique du moteur.

9. Procédé selon la revendication 8, **caractérisé en ce que** la courbe caractéristique du moteur est déterminée par le fait que, pour une tension électrique fixe du moteur, on détermine deux paires de valeurs de vitesse de rotation et de couple de rotation.

10. Procédé selon l'une des revendications 6 à 9, **caractérisé en ce que** le facteur de proportionnalité (Vf) est choisi en fonction de la température du moteur.

11. Procédé selon la revendication 10, **caractérisé en ce que** la température du moteur est estimée par le fait qu'on enregistre la température ambiante et la durée de service du moteur électrique (10).

12. Procédé selon l'une des revendications 1 à 11, **caractérisé en ce que** le moteur électrique (10) est désactivé ou inversé par l'unité de commande (24) dès que la valeur estimée de la force agissante actuelle dépasse une valeur de seuil de déclenchement prédéterminé (Fmax).

13. Procédé selon l'une des revendications 1 à 12, **caractérisé en ce que** la valeur pour la force agissant momentanément sur l'élément de véhicule (54) est déterminée entre deux instants d'arrivée du signal à impulsions, à des instants d'extrapolation déterminés ([k]).

14. Procédé selon la revendication 13, **caractérisé en ce qu'**à l'arrivée d'un nouveau signal à impulsions, on détermine chaque fois, à partir de la différence par rapport à au moins une valeur de mesure antérieure du signal à impulsions, une valeur de mesure de la durée de période actuelle (T[i]) de la rotation du moteur, sachant qu'à chaque instant d'extrapolation ([k]), on détermine une valeur estimée de la durée de période actuelle (T*[k]) en tenant compte d'au moins une durée de période mesurée précédente (T[i-1], T[i-2], T[i-3]), et qu'on détermine la valeur pour la modification de vitesse de rotation (ΔN*[k]) à partir des durées de période estimées.

15. Procédé selon la revendication 14, **caractérisé en ce que** la valeur de la modification de vitesse de rotation (ΔN*[k]) s'obtient à partir de la différence de la durée de période (T*[k]) estimée pour un instant d'extrapolation et de la durée de période (T*[k-1]) estimée pour l'instant d'extrapolation précédent, sachant que la durée de période estimée pour chaque instant d'extrapolation s'obtient comme somme de la dernière durée de période mesurée (T[i]) et de la somme, pondérée par des paramètres (a1, a2, a3), de plusieurs durées de période (T[i-1], T[i-2], T[i-3]) mesurées avant la dernière durée de période mesurée (T[i]), sachant que cette dernière somme est multipliée par le temps ([k]) écoulé depuis la dernière mesure.

16. Dispositif d'entraînement pour un élément de véhicule (54) mobile entre au moins deux positions, avec un moteur électrique (10) pour entraîner l'élément de véhicule (54) et un équipement (18, 20, 22) pour produire un signal à impulsions correspondant au mouvement de rotation du moteur électrique (10), signal qui est apporté à une unité de commande (24) destinée à commander le moteur, sachant que l'unité de commande (24) est conçue de telle sorte que l'instant d'arrivée de chaque signal à l'unité de commande (24) est enregistré, qu'à des instants déterminés, on détermine, à partir d'au moins une partie de ces instants jusqu'alors mesurés, une valeur respective pour la modification de la vitesse de rotation du moteur, qu'on calcule à partir de chaque valeur de modification de vitesse de rotation une valeur de modification de force et qu'au moins une partie des valeurs de modification de force jusqu'alors déterminées sont totalisées avec une pondération afin de déterminer une valeur pour la force agissant momentanément sur l'élément mobile de véhicule, sachant que cette valeur est utilisée comme critère pour décider si le moteur est ou non désactivé ou inversé, **caractérisé en ce que** l'unité de commande (24) est conçue de telle sorte que, pour le calcul des valeurs de modification de force, on utilise, pour chaque valeur de modification de vitesse de rotation qui dépasse une valeur de seuil supérieure, la valeur de cette valeur de seuil supérieure au lieu de la valeur de modification de vitesse de rotation.

17. Dispositif d'entraînement selon la revendication 16, **caractérisé en ce que** l'unité de commande (24) est conçue pour l'exécution du procédé selon l'une des revendications 2 à 15.

FIG. 1

# FIG. 2

Axis labels: Periodendauer T, T* (vertical), Zeit (horizontal)

Point labels: T[i-3], T[i-2], T[i-1], T[i], T[i+1], T[k-1], T[k-2], T[k-6]

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE OS2926938 A
- DE 4321264 A1
- DE 19511581 A1
- DE 4312865 A1
- DE 19618219 A1
- DE 4211495 C2